# EUROPEAN PATENT APPLICATION

(11) **EP 2 862 698 A1**
(43) Date of publication of application: **22.04.2015**
(21) Application number: 14173729.6
(22) Date of filing: 24.06.2014
(51) Int. Cl.: B29C 65/48, B62D 1/06

(54) **Method for manufacturing steering wheel cover**

(30) Priority: 17.10.2013 TW 102137535
(71) Applicant: Lee, Ho-Chang, New Taipei City 247 (TW)
(72) Inventor: Lee, Ho-Chang, New Taipei City 247 (TW)
(74) Representative: Becker, Eberhard

(57) **Abstract**

Method for manufacturing steering wheel cover connecting two ends of a silicone rubber bar (110) to form a close loop, wherein liquid silicone rubber (120) is smeared between the two ends of the silicone rubber bar (110). Then the silicone rubber bar (110) and the liquid silicone rubber (120) are vulcanized to form the steering wheel cover.

## Description

### BACKGROUND

### Field of the Application

The invention relates to a method for manufacturing steering wheel cover.

### Description of Related Art

In recent year, car has become a widely used transport. A steering wheel of the car is one of the main parts for a driver to operate the car, and thus the steering wheel of the car has also become one of the parts that are mostly touched by the driver during the process of driving. Many people would install a steering wheel cover on the steering wheel for not only protecting the cleanness of the steering wheel but also improving the touch feel of the driver in operating the steering wheel, so as to prevent the driver from having poor driving stability due to hand slipping when operating the steering wheel.

Traditional steering wheel cover is mostly made of leather material or artificial leather material, such that a plurality of materials being cut into small pieces are sewn into the steering wheel cover according to the size of the steering wheel. This manufacturing method is slow and high cost. Moreover, the leather material and the artificial leather material have smaller elasticity and are unable to be tightly sleeved onto the steering wheel, and dirt and sweat on this type of steering wheel cover are difficult to be cleaned.

Silicone rubber has higher elasticity and tensile strength, and thus has been used to replace the traditional leather or artificial leather material for manufacturing the steering wheel cover. A silicone rubber steering wheel cover may be sleeved onto the steering wheel after being stretched, and is tightly fitted onto the steering wheel so as to prevent the steering wheel cover and the steering wheel from producing a much large relative movement and thereby influence the driving safety when the driver is operating the steering wheel. Conventional silicone rubber steering wheel cover is mostly integrally formed via press molding, and thus the size of the steering wheel cover is limited.

### SUMMARY OF THE APPLICATION

The invention provides a method for manufacturing steering wheel cover having larger scope of application, favorable production efficiency and lower production cost.

The invention provides a method for manufacturing steering wheel cover including the following steps. At least one first silicone rubber bar is provided. Two ends of the first silicone rubber bar are connected into a close loop, wherein liquid silicone rubber is smeared to a connection between the two ends of the first silicone rubber bar. The first silicone rubber bar and the liquid silicone rubber are vulcanized to form the steering wheel cover.

In an embodiment of the invention, a material of the first silicone rubber bar and a material of the liquid silicone rubber are the same.

In an embodiment of the invention, a vulcanizing agent is further added into the liquid silicone rubber or solid silicone rubber. The vulcanizing agent is uniformly dispersed by rolling the solid silicone rubber or stirring the liquid silicone rubber. A second silicone rubber bar is extruded. The silicone rubber bar is baked through a baking tunnel. The second silicone rubber bar is cut to form the at least one first silicone rubber bar.

In an embodiment of the invention, the first silicone rubber bar or the second silicone rubber bar has a hollow profile.

In view of foregoing, the invention provides the method for manufacturing steering wheel cover, in which the two ends of the at least one silicone rubber bar are connected to form the close loop through using the liquid silicone rubber, and then the silicone rubber bar is vulcanized to form the steering wheel cover. As such, the method for manufacturing steering wheel cover as set forth in the invention is adapted to manufacture steering wheel covers of different sizes, enhance the efficiency of manufacturing the steering wheel covers and lower the costs thereof.

In order to make the aforementioned and other features and advantages of the present application more comprehensible, several embodiments accompanied with figures are described in detail below.

### BRIEF DESCRIPTION OF THE DRAWINGS

The accompanying drawings are included to provide a further understanding of the application, and are incorporated in and constitute a part of this specification. The drawings illustrate embodiments of the application and, together with the description, serve to explain the principles of the application.
FIG. 1 is a flow chart illustrating the manufacturing process of a steering wheel cover according to an embodiment of the invention.
FIG. 2 is a schematic diagram illustrating the steering wheel cover manufactured through the process depicted by FIG. 1.
FIG. 3 is a schematic diagram illustrating a steering wheel cover according to another embodiment of the invention.
FIG. 4 is a schematic diagram illustrating the steering wheel cover of FIG. 2 being sleeved on a steering wheel.

### DETAILED DESCRIPTION OF DISCLOSED EMBODIMENTS

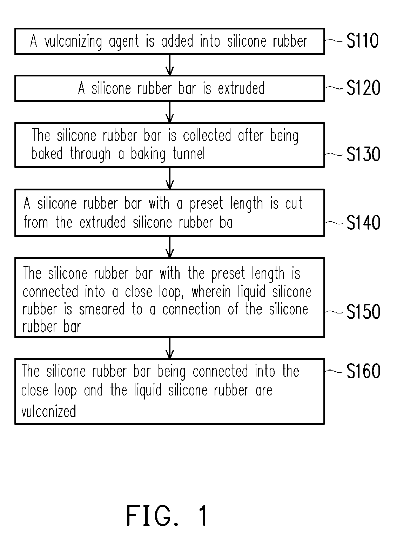

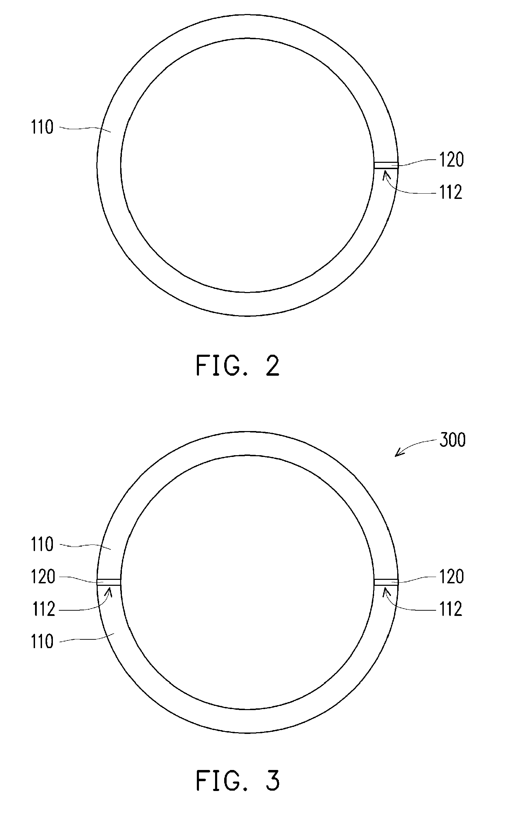

FIG. 1 is a flow chart illustrating the manufacturing process of a steering wheel cover according to an embodiment of the invention. FIG. 2 is a schematic diagram illustrating the steering wheel cover manufactured through the process depicted by FIG. 1. Referring to FIG. 1 and FIG. 2 at the same time, in the present embodiment, a method for manufacturing a steering wheel cover 100 includes the following steps. In step S110, a vulcanizing agent is added into silicone rubber. In step S120, a silicone rubber bar is extruded. In step S130, the silicone rubber bar is collected after being baked through a baking tunnel. In step S140, a silicone rubber bar 110 with a preset length is cut from the extruded silicone rubber bar. In step S150, the silicone rubber bar 110 with the preset length is connected into a close loop; in the present embodiment, the closed loop is formed into a circle, but may also be formed into other shapes, wherein liquid silicone rubber 120 is smeared to a connection between two ends of the silicone rubber bar 110. In step S160, the silicone rubber bar 110 being connected into the close loop and the liquid silicone rubber 120 are vulcanized. According to the above-described steps, the steering wheel cover 100 is formed.

Further details are provided in the following. Firstly, in the step S110, solid silicone rubber after being added with the vulcanizing agent may be rolled into the silicone rubber, so that the vulcanizing agent can be uniformly dispersed therein. In addition, the vulcanizing agent may also be uniformly dispersed through stirring after the vulcanizing agent is added into the liquid silicone rubber. Next, in the step S120, in the process of extruding the hollow silicone rubber bar via an extruder, a silicone rubber bar with longer length may be extruded for baking, and after being baked in the step S130, the silicone rubber bar is then cut into a plurality of silicone rubber bars 110 with a preset length according to a size requirement of the steering wheel cover 100. Thus, the length of the silicone rubber bar does not have to be considered during the extruding process, such that manufacturers on the production lines may extend the length of the silicone rubber bar by as much as possible at the current stage. Thereby, after the subsequent baking process is completed, the silicone rubber bar is being cut based on the required size. As a result, the applicability of the silicone rubber bar in terms of the length thereof is enhanced; and therefore, not only that the production efficiency of the front-end process (the process of extruding the hollow silicone rubber bar) is enhanced, but a material utilization rate of the extruded silicone rubber bar is also enhanced.

Next, in the steps S150 and S160, after the silicone rubber bar 110 is cut into an appropriate length, the liquid silicone rubber 120 is firstly smeared to the two ends of the silicone rubber bar 110, and then the silicone rubber bar 110 is connected into a circle (herein, a thickness of the liquid silicone rubber 120 shown in FIG. 2 is illustrated to be thicker for a clearer illustration), wherein the two ends of the silicone rubber bar 110 forms a connection 112. Afterward, the silicone rubber bar 110 and the liquid silicone rubber 120 smeared thereon are together vulcanized, so that the silicone rubber bar 110 is formed into the steering wheel cover 100 through a vulcanization effect of the connection of the liquid silicone rubber 120.

In the present embodiment, a material of the silicone rubber bar 110 and a material of the liquid silicone rubber 120 are the same. Thus, after being vulcanized, the liquid silicone rubber 120, in addition to connect the two ends of the silicone rubber bar 110, may also enable each part of the steering wheel cover 100 to be equally strong after completing the manufacturing of the steering wheel cover 100.

FIG. 3 is a schematic diagram illustrating a steering wheel cover according to another embodiment of the invention. Different from the above-mentioned embodiment, a steering wheel cover 300 of the present embodiment is composed of two silicone rubber bars 110 by smearing the liquid silicone rubber to the two connections 120 of the two silicone rubber bars 110. According to the above, the steering wheel cover 300 of the invention is thus still capable of adjusting a ring size thereof; namely, after the silicone rubber bar is formed by extrusion, the manufacturing method and condition of the silicone rubber bar 110 that is subsequently being manufactured into the steering wheel cover may all be adjusted according to the requirements.

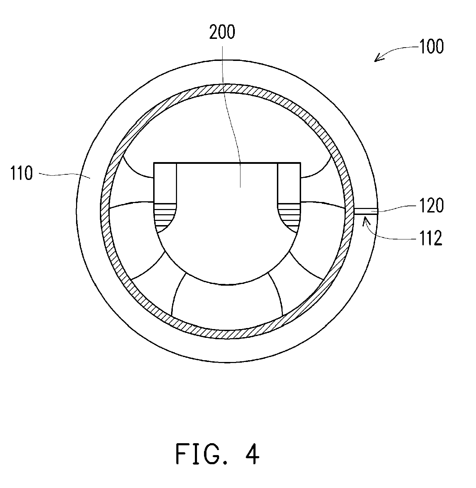

FIG. 4 is a schematic diagram illustrating the steering wheel cover of FIG. 2 being sleeved on a steering wheel. Referring to FIG. 2, FIG. 3 and FIG. 4, when the silicone rubber bar 110 is manufactured into the steering wheel cover 100 through the method for manufacturing steering wheel cover as set forth in the invention, the steering wheel cover 100 being represented in a hollow profile may, for example, be sleeved onto a steering wheel 200 of a car.

In summary, the invention provides the method for manufacturing steering wheel cover, in which the two ends of the at least one silicone rubber bar are connected to form the close loop through using the liquid silicone rubber, and then the silicone rubber bar is vulcanized to form the steering wheel cover. Furthermore, since the length of the silicone rubber bar is not required to be considered during the extruding process, the production efficiency of the production line may be enhances. Then, the silicone rubber bar with the preset length may subsequently be cut out according to the size requirement of the steering wheel, and the material utilization rate of the silicone rubber bar may also be effectively enhanced. In addition, appropriate amount and length of the silicone rubber bar being chosen for forming the steering wheel cover can be based on the size of the steering wheel, and thus the steering wheel cover of the invention may have larger scope of application.

## Claims

1. A method for manufacturing steering wheel cover, comprising:
providing at least one first silicone rubber bar (110);
connecting two ends of the first silicone rubber bar (110) with each other to form a close loop, wherein liquid silicone rubber (120) is smeared to a connection (112) between the two ends of the first silicone rubber bar (110); and
vulcanizing the first silicone rubber bar (110) and the liquid silicone rubber (120) to form the steering wheel cover (100).

2. The method for manufacturing steering wheel cover as recited in claim 1, wherein a material of the first silicone rubber bar (110) and a material of the liquid silicone rubber (120) are the same.

3. The method for manufacturing steering wheel cover as recited in claim 1, further comprising:
adding a vulcanizing agent to the liquid silicone rubber or solid silicone rubber;
rolling the solid silicone rubber or stirring the liquid silicone rubber to uniformly disperse the vulcanizing agent;
extruding a second silicone rubber bar;
baking the silicone rubber bar through a baking tunnel; and
cutting the second silicone rubber bar to form the at least one first silicone rubber bar (110).
